# EUROPEAN PATENT SPECIFICATION

(11) **EP 1 857 537 B1**
(45) Date of publication and mention of the grant of the patent: **04.09.2013**
(21) Application number: 06725773.3
(22) Date of filing: 20.02.2006
(51) Int. Cl.: C12G 1/032, F04B 9/131, F04B 43/06, F04B 43/073

(54) **FLUID-PUMPING SYSTEM**
FLÜSSIGKEITSPUMPSYSTEM
SYSTEME DE POMPAGE POUR FLUIDES

(30) Priority: 01.03.2005 ES 200500468
(43) Date of publication of application: 21.11.2007
(73) Proprietor: Alvarez Revuelta, Jesus, 26004 Logrono (ES); Alvarez Revuelta, Rosa Ana, 26004 Logrono (ES)
(72) Inventor: ALVAREZ VELAZQUEZ, Valentin, 26004 Logrono (ES)
(74) Representative: Gil-Vega, Victor
(86) International application number: PCT/ES2006/000075
(87) International publication number: WO 2006/092453

(56) References cited:
- WO-A1-93/15317
- ES-U- 1 023 211
- US-A- 3 516 761
- US-A- 4 553 910
- US-A- 5 152 675

## Description

### OBJECT OF THE INVENTION

The present patent application refers to a fluid pumping system that incorporates outstanding innovations and advantages as compared to the systems and procedures currently used, for instance, in the wine-making field.

More specifically, it refers to a pumping system for fluids intended, for example, for consumption, which comprises at least two interconnected storage tanks. DE 3 150 976 discloses a double diaphragm pump driven by compressed air.

### BACKGROUND OF THE INVENTION

The decanting or "separation" operation is known in the wine-making field and, more specifically, after the so-called "tumultuous fermentation" process, lasting for a period of 10 to 20 days. This operation consists in the passage of the wine from one storage tank to the other making solid particles sink to the bottom of the tank, either as a result of cold application or of the cold winter temperatures registered inside the wineries, the upper part of the wine content subsequently going through to another container. This operation is conducted to oxygenate the content and prevent the sediments from decomposing, which would alter the wine qualities.

In order to conduct the decanting operation, wine makers use conventional aspiration pumps to automate the process.

Nevertheless, the use of the pump causes strong stirring as a result of the violent content fall, as well as of the content circulation through the pipes of the premises, thus directly affecting the quality of the wine, such as, for example, its taste and colour properties.

### DESCRIPTION OF THE INVENTION

The present invention has been developed with the aim of providing a system for the pumping process that would solve the above-mentioned drawbacks, additionally providing further advantages which shall become evident from the description included below.

The fluid pumping system of the present invention, particularly intended for products from the wine-making industry, comprises at least two interconnected storage tanks, and is characterised by the fact that it comprises extraction and impulse means to conduct the passage of fluid content, said fluid content being water or air, from one storage tank to another in a uniform fashion through a pipe, each storage tank including an elastic membrane, dividing said tanks into two chambers respectively, maintaining the wine product separated from the water or air in each chamber, so that as one chamber or one of the tanks is being filled with fluid, either water or air, one of the chambers or the other tank is emptied until the process is reversed, said exchange being uniform and uninterrupted.

As a result of these characteristics, an improved system is obtained wherein the liquid content, such as a wine product, is handled more delicately in order to maintain a constant degree of quality during the whole pumping process, thus enabling the pumping of a larger quantity of wine.

Preferably, the extraction and impulse means consist in a turbine when the fluid to be passed is air. On the other hand, the extraction and impulse means consist in a pump when the content to be passed is water.

Other features and advantages of the fluid pumping system of the present invention shall become evident from the description of a preferred but not exclusive embodiment, which is illustrated as a non-limiting example in the drawings below, wherein:

### BRIEF DESCRIPTION OF THE DRAWINGS

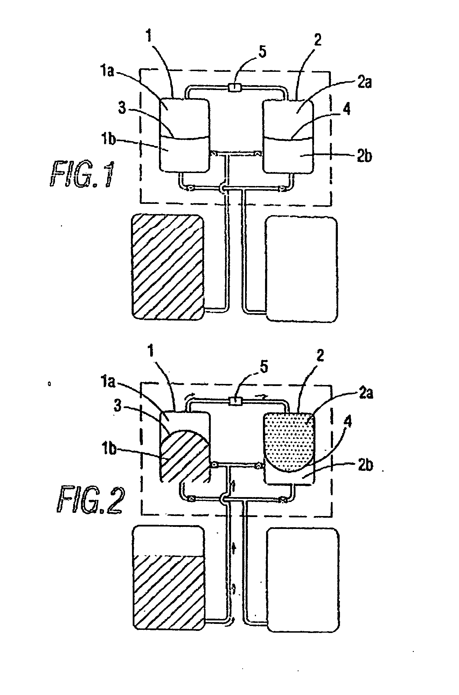

Figure 1.- Schematic vertical view of an installation intended to work with the pumping system of the invention in a first stage of the process described;
Figure 2.- Schematic view of the pumping system in a second stage;

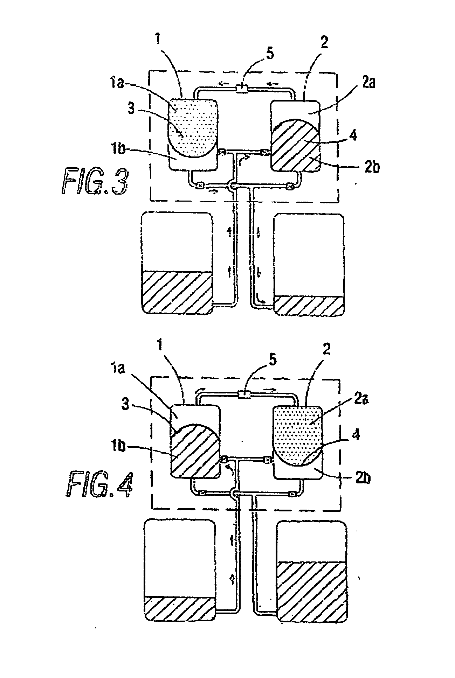

Figure 3.- Schematic view of the pumping system in a third stage;
Figure 4.- Schematic view of the pumping system in a fourth stage;

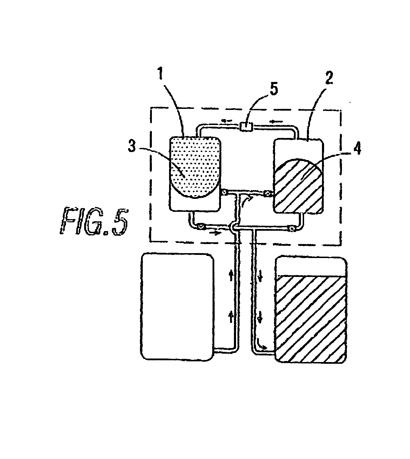

Figure 5.- Schematic view of the pumping system of the invention in a last stage.

### DESCRIPTION OF A PREFERRED EMBODIMENT

As shown in the figures, the fluid pumping system, particularly intended for products from the wine-making industry, described herein comprises at least two interconnected storage tanks (1, 2), with extraction and impulse means (5) to conduct the passage of fluid content, said fluid content being water or air, from one tank to the other in a uniform fashion through a pipe, each tank including an elastic membrane (3, 4) maintaining the wine product separate from the water or air, so that as a tank is being filled with fluid, the other is emptied until the process is reversed, said exchange being uniform and uninterrupted. Therefore, both tanks (1) and (2) are divided into chambers (1a, 1b) and (2a, 2b) respectively and chambers (1a) and (2a) define a closed circuit.

The extraction and impulse means (5) used consist in a turbine when the fluid to be passed is air, or a pump when the fluid to be passed is water either in the direction of chamber (1 a) or chamber (2a) or vice versa.

The storage tanks represented in the lower part of the figures correspond to the wine supply tank and to an empty tank.

In the figure attached the pumping system of the invention has been marked into a rectangle with a broken line, along with a series of electrical valves arranged in the different connections.

In the different figures used to facilitate the understanding of the object of this invention, arrows have been used to indicate the direction of the fluids, as well as striped areas, so that: the striped areas with equidistant and sloping lines represent the element to be pumped, for example, wine, whereas the dotted area indicates only the presence of the fluid, that is water or air.

The details, the shapes, the dimensions and other accessory elements, as well as the materials used in the manufacture of the fluid pumping system of the invention may be conveniently replaced by others which are technically equivalent and respond to the essence of the invention and the field defined by the claims included below.

## Claims

1. A "fluid pumping system", particularly intended for products from the wine-making industry, which comprises at least two interconnected storage tanks (1, 2), **characterised by** the fact that it comprises extraction and impulse means (5) to conduct the passage of fluid content, said content being water or air, from one tank to the other in a uniform fashion through a pipe, each of the tanks (1, 2) including an elastic membrane (3, 4), dividing said tanks (1, 2) into chambers (1a, 1b) and (2a, 2b) respectively, maintaining the wine product separate from the water or air in each chamber so that as one chamber (1 a) or (2a) of a tank is being filled with fluid (water or air), one of the chambers (2a) or (1 a) of the other tank is emptied until the process is reversed, said exchange being uniform, continuous and uninterrupted.

2. A "fluid pumping system" according to claim 1, wherein the extraction and impulse means (5) consist in a turbine when the fluid to be passed is air.

3. A "fluid pumping system" according to claim 1, wherein the extraction and impulse means (5) consist in a pump when the fluid to be passed is water.

## Patentansprüche

1. Ein "Fluidpumpensystem", das hauptsächlich für Produkte der Weinindustrie vorgesehen ist und mindestens zwei miteinander verbundene Speicherbehälter (1, 2) umfasst, **gekennzeichnet dadurch, dass** es Mittel für die Entnahme und Förderung (5) besitzt für das gleichmäßige Weiterleiten, von einem Speicherbehälter zum anderen, des Durchflusses des Fluidinhalts durch ein Rohr, wobei dieser Inhalt Wasser oder Luft sein kann und jeder Behälter (1, 2) eine elastische Membrane (3, 4) umfasst, die besagte Speicherbehälter (1,2) in je zwei Kammern (1a, 1b) und (2a, 2b) unterteilt, wodurch das Weinprodukt vom Wasser oder der Luft in jeder Kammer getrennt gehalten wird, so dass bei Füllen einer Kammer (1a) oder (2a) eines Behälters mit dem Fluid (Wasser oder Luft) eine der Kammern (2a) oder (1a) des anderen Behältersgeleert wird, bis der Vorgang umgeschaltet wird, wobei dieser Wechsel gleichmäßig, fortlaufend und ununterbrochen ist.

2. Ein "Fluidpumpensystem" gemäß Anspruch 1, in dem das Entnahme- und Fördermittel (5) eine Turbine ist, wenn das zu fördernde Fluid Luft ist.

3. Ein "Fluidpumpensystem" gemäß Anspruch 1, in dem das Entnahme- und Fördermittel (5) eine Pumpe ist, wenn das zu fördernde Fluid Wasser ist.

## Revendications

1. Un système de pompage de fluides, particulièrement des produits de l'industrie vinicole, qui comprend au moins deux cuves de stockage connectées l'une à l'autre (1, 2), **caractérisé en ce que** ce système comprend des moyens d'extraction et d'impulsion (5) pour conduire le passage d'un volume de fluide, sous la forme d'eau ou d'air, de l'une des cuves à l'autre d'une façon uniforme à travers un conduit, chaque cuve (1, 2) incluant une membrane élastique (3, 4), divisant respectivement lesdites cuves (1, 2) en chambres (1a, 1b) et (2a, 2b), en maintenant le produit viti-vinicole séparé de l'eau ou de l'air dans chaque chambre, de sorte que pendant qu'une chambre (1a) ou (2a) d'une cuve est remplie avec du fluide (eau ou air), l'une des chambres (2a) ou (1a) de l'autre cuve soit vidée jusqu'à ce que le processus s'inverse, cet échange étant uniforme, continu et ininterrompu.

2. Un système de pompage de fluide selon la revendication 1 où les moyens d'extraction et d'impulsion (5) consistent en une turbine lorsque le fluide à pomper est de l'air.

3. Un système de pompage de fluide selon la revendication 1 où les moyens d'extraction et d'impulsion (5) consistent en une pompe lorsque le fluide à pomper est de l'eau.
